# EUROPEAN PATENT SPECIFICATION

(11) **EP 0 375 077 B1**
(45) Date of publication and mention of the grant of the patent: **02.06.1993**
(21) Application number: 89203300.2
(22) Date of filing: 21.12.1989
(51) Int. Cl.: B01D 53/34, B01D 53/14, C01B 17/05

(54) **Removing hydrogen sulphide from a gas mixture**
Abtrennen von Schwefelwasserstoff aus einer Gasmischung
Séparation de l'acide sulfhydrique dans des mélanges gazeux

(30) Priority: 23.12.1988 GB 8830199
(43) Date of publication of application: 27.06.1990
(73) Proprietor: SHELL INTERNATIONALE RESEARCH MAATSCHAPPIJ B.V., 2596 HR Den Haag (NL)
(72) Inventor: Christy, John Graham, NL-2596 HR The Hague (NL)

(56) References cited:
- EP-A- 0 045 013
- EP-A- 0 054 772
- EP-A- 0 152 647
- GB-A- 1 356 289
- GB-A- 2 103 645
- GB-A- 2 202 522

## Description

The present invention relates to removing hydrogen sulphide from a gas mixture including carbon dioxide and hydrogen sulphide, in particular the present invention relates to removing hydrogen sulphide from a gas mixture in which the molar ratio of carbon dioxide to hydrogen sulphide is very large, for example between 20 and 45.

Such a gas mixture is for example natural gas or gas produced by the gasification of carbonaceous material such as coal.

British patent application publication No. 2 103 645 discloses a process for removing hydrogen sulphide from a gas mixture including carbon dioxide and hydrogen sulphide, which process comprises the steps of
a) contacting in a main absorber at elevated pressure the gas mixture with lean and regenerable aqueous absorbent to obtain a purified gas mixture and a loaded absorbent;
b) introducing the loaded absorbent into a separation vessel at a reduced pressure and removing flash-off gas and partially regenerated absorbent from the separation vessel;
c) removing hydrogen sulphide from the flash-off gas to obtain a lean gas and converting the removed hydrogen sulphide into elemental sulphur;
d) introducing partially regenerated absorbent into a regenerator for totally regenerating absorbent to obtain lean absorbent for use in step a) and regenerator off-gas including hydrogen sulphide; and
e) supplying the regenerator off-gas to a sulphur recovery plant to obtain elemental sulphur and a plant off-gas which includes sulphur dioxide.

British patent specification No. 1 356 289 discloses a process for removing sulphur components from the off-gas from a sulphur recovery plant, which process comprises the steps of
1) treating the plant off-gas in a convertor to convert sulphur dioxide to hydrogen sulphide to obtain reduced off-gas; and
2) removing hydrogen sulphide from the reduced off-gas to obtain a substantially hydrogen sulphide free off-gas and converting the removed hydrogen sulphide into elemental sulphur.

In the specification and in the claims the expression "lean gas" is used to refer to a gas mixture which is lean in hydrogen sulphide.

Removing hydrogen sulphide in steps c) and 2) of the known processes is done by contacting the gas including hydrogen sulphide with a lean and regenerable aqueous absorbent and the absorbent loaded with hydrogen sulphide is totally regenerated. Selective removal of hydrogen sulphide in step 2) means selective with respect to carbon dioxide.

In the process disclosed in British patent application No. 2 103 645 contacting to remove hydrogen sulphide in step c) is carried out in such a way that the lean gas was substantially hydrogen sulphide free this corresponds to a hydrogen sulphide content of less than 400 ppmv (parts per million by volume). In this way substantially all hydrogen sulphide which was present in the flash-off gas was passed with the loaded absorbent to the regenerator and from there to the sulphur recovery plant. This kind of hydrogen sulphide removal is referred to as deep hydrogen sulphide removal.

It was found, however, that when carrying out deep hydrogen sulphide removal a large amount of carbon dioxide is co-absorbed. This co-absorbed carbon dioxide is thus present in the regenerator off-gas which is supplied to the sulphur recovery plant.

Since carbon dioxide is an unwanted compound in a sulphur recovery plant it is an object of the present invention to reduce the amount of carbon dioxide present in the gas as supplied to the sulphur recovery plant.

To this end the process for removing hydrogen sulphide from a gas mixture including carbon dioxide and hydrogen sulphide according to the present invention comprises the steps of
a) contacting in a main absorber at elevated pressure the gas mixture with lean and regenerable aqueous absorbent to obtain a purified gas mixture and a loaded absorbent;
b) introducing the loaded absorbent into a separation vessel at a reduced pressure and removing flash-off gas and partially regenerated absorbent from the separation vessel;
c) removing hydrogen sulphide from the flash-off gas to obtain a lean gas and converting the removed hydrogen sulphide into elemental sulphur;
d) introducing partially regenerated absorbent into a regenerator for totally regenerating absorbent to obtain lean absorbent for use in step a) and regenerator off-gas including hydrogen sulphide;
e) supplying the regenerator off-gas to a sulphur recovery plant to obtain elemental sulphur and a plant off-gas which includes sulphur dioxide;
f) treating the plant off-gas in a convertor to convert sulphur dioxide to hydrogen sulphide to obtain reduced off-gas;
g) mixing at least part of the lean gas obtained in step c) with the reduced plant off-gas and the remainder with the plant off-gas; and
h) removing hydrogen sulphide from the mixture of reduced off-gas and lean gas to obtain a substantially hydrogen sulphide free off-gas and converting the removed hydrogen sulphide into elemental sulphur.

An advantage of the process according to the invention is that a gas mixture further containing organic sulphur compounds such as carbon oxysulphide or carbon disulphide will be hydrolyzed in step f). In particular if the lean gas is mixed with the plant off-gas (thus before step f)) organic sulphur compounds in the lean gas are removed as well.

Reference is made to British patent application publication No. 2 202 522. This publication discloses a process for removing hydrogen sulphide from a gas mixture including carbon dioxide and hydrogen sulphide comprising the steps of
a) contacting in a main absorber at elevated pressure the gas mixture with lean and regenerable aqueous absorbent to obtain a purified gas mixture and a loaded absorbent;
b) introducing the loaded absorbent into a separation vessel at a reduced pressure and removing flash-off gas and partially regenerated absorbent from the separation vessel;
c) introducing partially regenerated absorbent into a regenerator for totally regenerating absorbent to obtain lean absorbent for use in step a) and regenerator off-gas including hydrogen sulphide;
d) contacting the flash-off gas from step b) and the regenerator off-gas in a contactor with aqueous reactant solution to convert hydrogen sulphide to elemental sulphur; and
e) removing a purified gas from the contactor.

This process is different from the one disclosed in British patent application publication No. 2 103 645 in that no sulphur dioxide is produced when hydrogen sulphide is converted to elemental sulphur in step d).

In an embodiment of the process according to the invention removing hydrogen sulphide from the flash-off gas and converting the removed hydrogen sulphide into elemental sulphur (step c)) comprises contacting the flash-off gas in a secondary absorber with lean and regenerable aqueous absorbent and totally regenerating the formed loaded absorbent to obtain a gas which is supplied to the sulphur recovery plant.

Since in the process according to the invention hydrogen sulphide is removed from the gas mixture which is lean in hydrogen sulphide, there is no need for deep hydrogen sulphide removal in step c). Consequently the amount of co-absorbed carbon dioxide in the loaded absorbent is less than in the known process. Thus the amount of carbon dioxide in the regenerator off-gas is less and as a result the regenerator off-gas is a more suitable feed for the sulphur recovery plant.

Hydrogen sulphide can in step c) also be removed in another manner, namely by contacting the flash-off gas with an aqueous reactant solution containing an effective amount of an oxidizing reactant to obtain a lean gas and an aqueous solution containing reduced reactant and elemental sulphur, from which solution elemental sulphur is subsequently separated. The reduced reactant is thereafter oxidized to obtain regenerated reactant solution for reuse. Preferably in this embodiment the lean gas is mixed with plant-off gas in step g) so that organic sulphur compounds can be hydrolyzed.

In a further embodiment of the invention removing hydrogen sulphide from the mixture of reduced off-gas and lean gas to obtain a substantially hydrogen sulphide free off-gas and converting the removed hydrogen sulphide into elemental sulphur (step h)) includes contacting in a tertiary absorber the mixture of gases with lean and regenerable aqueous absorbent and totally regenerating the obtained loaded absorbent to obtain a gas which is supplied to the sulphur recovery plant.

Since the removal of hydrogen sulphide in step h) is a selective removal, only a minor part of the carbon dioxide which is present in the lean gas as obtained in step c) is co-absorbed; the major part is removed with the substantially hydrogen sulphide free off-gas.

It will be appreciated that the hydrogen sulphide removal in step h) can be carried out by contacting the mixture of gases with an aqueous reactant solution containing an effective amount of an oxidizing reactant to obtain a substantially hydrogen sulphide free gas and an aqueous solution containing reduced reactant and elemental sulphur, from which solution elemental sulphur is subsequently removed. The reduced reactant is thereafter oxidized to obtain regenerated reactant solution.

The conditions for contacting gas in step c) and/or in step h) with an aqueous reactant solution and the conditions for regenerating the aqueous reactant solution are well known and not relevant to the present invention. The aqueous reactant composition comprises suitably a coordination complex of a metal, such as iron, wherein the chelating agent is nitrilotriacetic acid.

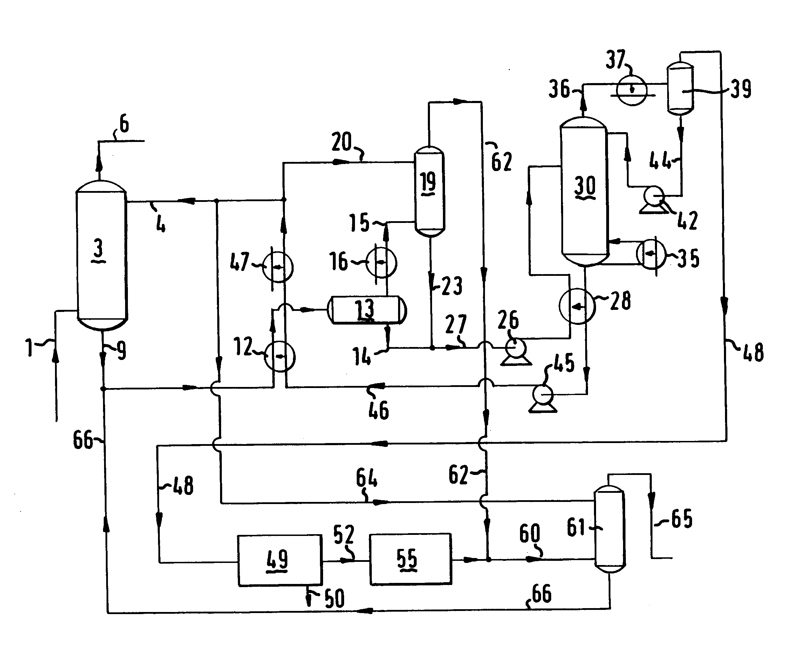

The invention will now be described by way of example in more detail with reference to the accompanying drawing showing a flow scheme for carrying out the process according to the present invention.

A gas mixture including carbon dioxide and hydrogen sulphide is supplied through conduit 1 to main absorber 3. In the main absorber 3 the gas mixture is countercurrently contacted at elevated pressure with lean and regenerable aqueous absorbent supplied to the main absorber 3 through conduit 4 to obtain a purified gas mixture and a loaded absorbent. The purified gas mixture is removed through conduit 6, and loaded absorbent is removed through conduit 9. The temperatures and pressures pertaining to absorption are known as such and are not relevant to the invention.

Loaded absorbent passing through conduit 9 provided with a pressure reducing valve (not shown) is heated in heat-exchanger 12 and then introduced at elevated temperature and at reduced pressure into separation vessel 13. From the separation vessel 13 loaded absorbent out of which gas has been desorbed is removed as partially loaded absorbent through conduit 14, and desorbed gas is removed as flash-off gas through conduit 15. The reduced pressure is so selected that the bulk of the carbon dioxide is removed from the absorbent in the separation vessel 13. However, some hydrogen sulphide will desorb as well and will thus be present in the flash-off gas.

To remove hydrogen sulphide from the flash-off gas this gas is passed through conduit 15 provided with cooler 16 to secondary contactor 19. In secondary contactor 19 the gas is contacted with lean and regenerable aqueous absorbent supplied through conduit 20 to obtain a lean gas and loaded absorbent. The temperatures and pressures pertaining to absorption are known as such and are not relevant to the invention.

The loaded absorbent removed from the secondary absorber 19 through conduit 23 is pumped by pump 26 together with partly regenerated absorbent through conduit 27 via heat-exchanger 28 to regenerator 30. In the regenerator 30 the absorbent is totally regenerated by stripping with steam which is obtained by reboiling part of the absorbent in reboiler 35 and introducing heated steam-containing fluid in the bottom part of the regenerator 30. The temperatures and pressures pertaining to regenerating an absorbent are known as such and are not relevant to the invention.

Regenerator off-gas including hydrogen sulphide is removed through conduit 36, cooled in cooler 37 and passed to separator 39. Condensate is returned by pump 42 in conduit 44 to the upper part of the regenerator 30.

Regenerated lean absorbent is pumped by means of pump 45 through conduit 46 via heat-exchangers 28 and 12 and cooler 47 for reuse in absorbers 3 and 19.

Through conduit 48 regenerator off-gas is supplied to a sulphur recovery plant 49 to obtain elemental sulphur which is removed through conduit 50. In the sulphur recovery plant 49 elemental sulphur is produced according to the following two reactions:

2H₂S + 3O₂ <===> 2H₂O + 2SO₂, and

4H₂S + 2SO₂ <===> 4H₂O + 6S.

The reactions are carried out in the presence of a suitable catalyst and at suitable conditions which are well known as such and not relevant to the present invention.

Since the reactions are not complete there is a plant off-gas which includes sulphur dioxide, this off-gas is supplied through conduit 52 to reduction reactor 55.

In the reduction reactor 55 the plant off-gas is catalytically treated in the presence of a reducing gas such as hydrogen in order to convert sulphur dioxide to hydrogen sulphide to obtain reduced off-gas. The catalysts used and the conditions in which the reduction is carried out are known as such an not relevant to the present invention.

Reduced plant off-gas is passed through conduit 60. The lean gas from the secondary absorber 19 is supplied through conduit 62 to the gas in conduit 60 and the mixture is supplied after quenching (not shown) to tertiary absorber 61.

In the tertiary absorber the mixture of gases is contacted with lean and regenerable aqueous absorbent which is supplied through conduit 64.

In order to remove hydrogen sulphide selectively from the gas, the tertiary absorber 61 contains fewer than 20 contacting trays, and the gas velocity is greater than 0.6 m/s and preferably between 1 and 4 m/s based on the effective or aerated area of a contacting tray.

Substantially hydrogen sulphide free off-gas is removed from the tertiary absorber through conduit 65, and, in order to convert the removed hydrogen sulphide into elemental sulphur, the loaded absorbent is supplied through conduit 66 to loaded absorbent in conduit 9 upstream the heat-exchanger 12.

The absorbent as used in the process according to the invention includes a chemical absorbent, such as a secondary or tertiary amine, and a physical absorbent, such as sulfolane.

In an alternative of the process (not shown) as described with reference to the enclosed drawing the lean gas from secondary absorber 19 is mixed with plant off-gas in conduit 52 upstream reactor 55. This embodiment is suitable to hydrolyze organic sulphur compounds such as carbon oxysulphide or carbon disulphide.

In a further alternative of the process (not shown) only part of the lean gas from secondary absorber 19 is mixed with the reduced plant off-gas in conduit 60 downstream reactor 55, and the remainder is mixed with plant off-gas in conduit 52 upstream reactor 55.

## Claims

1. Process for removing hydrogen sulphide from a gas mixture including carbon dioxide and hydrogen sulphide comprising the steps of
a) contacting in a main absorber at elevated pressure the gas mixture with lean and regenerable aqueous absorbent to obtain a purified gas mixture and a loaded absorbent;
b) introducing the loaded absorbent into a separation vessel at a reduced pressure and removing flash-off gas and partially regenerated absorbent from the separation vessel;
c) removing hydrogen sulphide from the flash-off gas to obtain a lean gas and converting the removed hydrogen sulphide into elemental sulphur;
d) introducing partially regenerated absorbent into a regenerator for totally regenerating absorbent to obtain lean absorbent for use in step a) and regenerator off-gas including hydrogen sulphide;
e) supplying the regenerator off-gas to a sulphur recovery plant to obtain elemental sulphur and a plant off-gas which includes sulphur dioxide;
f) treating the plant off-gas to convert sulphur dioxide to hydrogen sulphide to obtain reduced off-gas;
g) mixing at least part of the lean gas obtained in step c) with the reduced plant off-gas and the remainder with the plant off-gas; and
h) removing hydrogen sulphide from the mixture of reduced off-gas and lean gas to obtain a substantially hydrogen sulphide free off-gas and converting the removed hydrogen sulphide into elemental sulphur.

2. Process as claimed in claim 1, wherein loaded solvent obtained in step a) is heated in a heater before it is introduced into the separation vessel.

3. Process as claimed in claim 1 or 2, wherein removing hydrogen sulphide from the flash-off gas and converting the removed hydrogen sulphide to elemental sulphur in step c) comprises contacting in a secondary absorber the flash-off gas with lean and regenerable aqueous absorbent and totally regenerating the obtained loaded absorbent to obtain a gas which is supplied to the sulphur recovery plant.

4. Process as claimed in claim 3, wherein the loaded absorbent is introduced directly into the regenerator.

5. Process as claimed in claim 3, wherein the loaded absorbent is introduced into the separation vessel.

6. Process as claimed in claim 3, wherein loaded absorbent is supplied to the heater.

7. Process as claimed in claim 1 or 2, wherein removing hydrogen sulphide from the flash-off gas and converting the removed hydrogen sulphide to elemental sulphur in step c) comprises contacting the flash-off gas with an aqueous reactant solution containing an effective amount of an oxidizing reactant to obtain a lean gas and an aqueous solution containing reduced reactant and elemental sulphur, separating elemental sulphur from the solution, and oxidizing reduced reactant.

8. Process as claimed in any one of the claims 1-3, wherein removing hydrogen sulphide from the mixture of gases and converting the removed hydrogen sulphide in step g) comprises contacting in a tertiary absorber the reduced off-gas with lean and regenerable aqueous absorbent and totally regenerating the obtained loaded absorbent to obtain a gas which is supplied to the sulphur recovery plant.

9. Process as claimed in claim 7, wherein loaded absorbent is introduced directly into the regenerator.

10. Process as claimed in claim 8, wherein loaded absorbent is supplied to the heater.

11. Process as claimed in any one of the claims 1-3, wherein removing hydrogen sulphide from the mixture of gases and converting the removed hydrogen sulphide in step g) comprises contacting the mixture of gases with an aqueous reactant solution containing an effective amount of an oxidizing reactant to obtain a substantial hydrogen sulphide free off-gas and an aqueous solution containing reduced reactant and elemental sulphur, removing elemental sulphur from the solution, and oxidizing reduced reactant.

12. Process as claimed in claim 1 or 2, wherein removing hydrogen sulphide from the flash-off gas and converting the removed hydrogen sulphide to elemental sulphur in step c) comprises contacting the flash-off gas with an aqueous reactant solution containing an effective amount of an oxidizing reactant to obtain a lean gas and an aqueous solution containing reduced reactant and elemental sulphur, separating elemental sulphur from the solution, and oxidizing reduced reactant, and wherein removing hydrogen sulphide from the mixture of gases and converting the removed hydrogen sulphide in step g) comprises contacting the mixture of gases with an aqueous reactant solution containing an effective amount of an oxidizing reactant to obtain a substantial hydrogen sulphide free off-gas and an aqueous solution containing reduced reactant and elemental sulphur, removing elemental sulphur from the solution, and oxidizing reduced reactant.

## Patentansprüche

1. Verfahren zum Abtrennen von Schwefelwasserstoff aus einer Gasmischung, die Kohlendioxid und Schwefelwasserstoff enthält, umfassend die nachstehenden Verfahrensstufen:
a) Kontaktieren der Gasmischung in einem Hauptabsorber bei erhöhtem Druck mit verarmtem und regenerierfähigem wäßrigen Absorbens unter Bildung einer gereinigten Gasmischung und eines beladenen Absorbens;
b) Einspeisen des beladenen Absorbens in einen Trenntank bei vermindertem Druck und Abziehen des abgeflashten Gases sowie des teilweise regenerierten Absorbens aus dem Trenntank;
c) Abtrennen des Schwefelwasserstoffs aus dem abgeflashten Gas unter Erhalt eines Armgases und Umwandlung des abgetrennten Schwefelwasserstoffs in elementaren Schwefel;
d) Einspeisen des teilregenerierten Absorbens in einen Regenerator zwecks vollständiger Regenerierung des Absorbens unter Erhalt eines verarmten Absorbens zur Wiederverwendung in der Verfahrensstufe a) und eines Regenerator-Abgases, das Schwefelwasserstoff enthält;
e) Weiterleiten des Regenerator-Abgases zu einer Schwefelgewinnungsanlage zwecks Erhalt von elementarem Schwefel und eines schwefeldioxidhaltigen Abgases aus der Anlage;
f) Behandeln des Anlage-Abgases in einem Konverter zwecks Umwandlung des Schwefeldioxids in Schwefelwasserstoff unter Erhalt eines reduzierten Abgases;
g) Vermischen mindestens eines Teils des in Stufe c) erhaltenen Armgases mit dem reduzierten Abgas der Anlage und des restlichen Anteils mit dem Anlage-Abgas; und
h) Abtrennen von Schwefelwasserstoff aus der Mischung von reduziertem Abgas und Armgas unter Erhalt eines praktisch schwefelwasserstofffreien Abgases und Umwandeln des abgetrennten Schwefelwasserstoffs in elementaren Schwefel.

2. Verfahren, wie in Anspruch 1 beansprucht, wobei das in Stufe a) gebildete beladene Lösungsmittel vor Einspeisung in den Trenntank erhitzt wird.

3. Verfahren, wie in Anspruch 1 oder 2 beansprucht, wobei das Abtrennen von Schwefelwasserstoff aus dem abgeflashten Gas und die Umwandlung des abgetrennten Schwefelwasserstoffs in elementaren Schwefel gemäß Stufe c) das Kontaktieren des abgeflashten Gases in einem zweiten Absorber mit verarmtem und regenerierfähigem wäßrigen Absorbens und die vollständige Regenerierung des beladenen Absorbens unter Bildung eines Gases umfaßt, das der Schwefelgewinnungsanlage zugeführt wird.

4. Verfahren, wie in Anspruch 3 beansprucht, wobei das beladene Absorbens direkt in den Regenerator eingespeist wird.

5. Verfahren, wie in Anspruch 3 beansprucht, wobei das beladene Absorbens in den Trenntank eingespeist wird.

6. Verfahren, wie in Anspruch 3 beansprucht, wobei das beladene Absorbens der Aufheizvorrichtung zugeführt wird.

7. Verfahren, wie in Anspruch 1 oder 2 beansprucht, wobei das Abtrennen von Schwefelwasserstoff aus dem abgeflashten Gas und die Umwandlung des abgetrennten Schwefelwasserstoffs in elementaren Schwefel gemäß Stufe c) das Kontaktieren des abgeflashten Gases mit einer wäßrigen Reaktantenlösung, die eine wirksame Menge eines oxidierenden Reaktanten enthält, unter Bildung eines Armgases und einer den reduzierten Reaktanten und elementaren Schwefel enthaltenden Lösung sowie das Abtrennen von elementarem Schwefel aus der Lösung und das Oxidieren des reduzierten Reaktanten umfaßt.

8. Verfahren, wie in irgendeinem der Ansprüche 1 bis 3 beansprucht, wobei das Abtrennen von Schwefelwasserstoff aus der Gasmischung und das Umwandeln des abgetrennten Schwefelwasserstoffs gemäß Stufe g) das Kontaktieren des reduzierten Abgases in einem dritten Absorber mit verarmtem und regenerierfähigem wäßrigen Absorbens und das vollständige Regenerieren des so erhaltenen beladenen Absorbens unter Bildung eines Gases umfaßt, das der Schwefelgewinnungsanlage zugeführt wird.

9. Verfahren, wie in Anspruch 7 beansprucht, wobei das beladene Absorbens direkt in den Regenerator eingespeist wird.

10. Verfahren, wie in Anspruch 8 beansprucht, wobei das beladene Absorbens der Aufheizvorrichtung zugeführt wird.

11. Verfahren, wie in irgendeinem der Ansprüche 1 bis 3 beansprucht, wobei das Abtrennen von Schwefelwasserstoff aus der Gasmischung und das Umwandeln des abgetrennten Schwefelwasserstoffs gemäß Stufe g) das Kontaktieren der Gasmischung mit einer wäßrigen Reaktantenlösung, die eine wirksame Menge an oxidierendem Reaktanten enthält, unter Bildung eines im wesentlichen schwefelwasserstofffreien Abgases und einer reduzierten Reaktanten sowie elementaren Schwefel enthaltenden Lösung und das Abtrennen des elementaren Schwefels aus der Lösung sowie das Oxidieren des reduzierten Reaktanten umfaßt.

12. Verfahren, wie in Anspruch 1 oder 2 beansprucht, wobei das Abtrennen von Schwefelwasserstoff aus dem abgeflashten Gas und das Umwandeln des abgetrennten Schwefelwasserstoffs in elementaren Schwefel gemäß Stufe c) das Kontaktieren des abgeflashten Gases mit einer wäßrigen Reaktantenlösung, die eine wirksame Menge eines oxidierenden Reaktanten enthält, unter Bildung eines Armgases und einer reduzierten Reaktanten sowie elementaren Schwefel enthaltenden Lösung, das Abtrennen des elementaren Schwefels aus der Lösung sowie das Oxidieren des reduzierten Reaktanten umfaßt und wobei das Abtrennen von Schwefelwasserstoff aus der Gasmischung und das Umwandeln des abgetrennten Schwefelwasserstoffs gemäß Stufe g) das Kontaktieren der Gasmischung mit einer wäßrigen Reaktantenlösung, die eine wirksame Menge an oxidierendem Reaktanten enthält, unter Bildung eines praktisch schwefelwasserstofffreien Abgases und einer reduzierten Reaktanten und elementaren Schwefel enthaltenden wäßrigen Lösung sowie das Abtrennen des elementaren Schwefels aus der Lösung und das Oxidieren des reduzierten Reaktanten umfaßt.

## Revendications

1. Procédé de séparation de l'acide sulfhydrique dans des mélanges gazeux comprenant du dioxyde de carbone et de l'acide sulfhydrique, comprenant les étapes consistant à :
a) mettre en contact, dans un dispositif d'absorption principal à pression élevée, le mélange gazeux avec un absorbant aqueux pauvre et pouvant être régénéré afin d'obtenir un mélange de gaz purifié et un absorbant chargé ;
b) introduire l'absorbant chargé dans un récipient de séparation à une pression réduite et à retirer le gaz; qui se dégage rapidement et l'absorbant partiellement régénéré du récipient de séparation ;
c) séparer l'acide sulfhydrique du gaz qui se dégage rapidement afin d'obtenir un gaz pauvre et à convertir l'acide sulfhydrique séparé en soufre élémentaire ;
d) introduire l'absorbant partiellement régénéré dans un régénérateur afin de régénérer totalement l'absorbant afin d'obtenir un absorbant pauvre pouvant être utilisé dans le cadre de l'étape a) et du gaz de régénération qui se dégage comprenant de l'acide sulfhydrique ;
e) alimenter le gaz; de régénération qui se dégage vers une installation de récupération du soufre afin d'obtenir du soufre élémentaire et un gaz qui se dégage provenant de l'installation comprenant du dioxyde de soufre ;
f) traiter le gaz qui se dégage provenant de l'installation dans un convertisseur afin de convenir le dioxyde de soufre en acide sulfhydrique pour obtenir un gaz réduit qui se dégage ;
g) mélanger au moins une partie du gaz pauvre obtenu au cours de l'étape c) avec le gaz réduit qui se dégage et le reste avec le gaz qui se dégage provenant de l'installation ; et
h) séparer l'acide sulfhydrique du mélange de gaz réduit qui se dégage et de gaz pauvre afin d'obtenir un gaz qui se dégage ne contenant substantiellement pas d'acide sulfhydrique et à convenir l'acide sulfhydrique séparé en soufre élémentaire.

2. Le procédé selon la revendication 1, dans lequel le solvant chargé obtenu au cours de l'étape a) est chauffé avant d'être introduit dans le récipient de séparation.

3. Le procédé selon la revendication 1 ou 2, dans lequel la séparation de l'acide sulfhydrique du gaz qui se dégage rapidement et la conversion de l'acide sulfhydrique séparé en soufre élémentaire au cours de l'étape c) comprennent le fait de mettre en contact dans un dispositif d'absorption secondaire le gaz qui se dégage rapidement avec un absorbant aqueux pauvre et pouvant être régénéré et le fait de régénérer totalement l'absorbant chargé obtenu afin que l'on obtienne un gaz qui est alimenté vers l'installation de récupération du soufre.

4. Le procédé selon la revendication 3, dans lequel l'absorbant chargé est introduit directement dans le régénérateur.

5. Le procédé selon la revendication 3, dans lequel l'absorbant chargé est introduit dans le récipient de séparation.

6. Le procédé selon la revendication 3, dans lequel l'absorbant chargé est alimenté vers le dispositif de chauffage.

7. Le procédé selon la revendication 1 ou 2, dans lequel la séparation de l'acide sulfhydrique du gaz qui se dégage rapidement et la conversion de l'acide sulfhydrique séparé en soufre élémentaire au cours de l'étape c), comprennent le fait de mettre en contact le gaz qui se dégage rapidement avec une solution aqueuse de réactif contenant une quantité efficace d'un réactif oxydant afin que l'on obtienne un gaz pauvre et une solution aqueuse contenant du réactif réduit et du soufre élémentaire, la séparation du soufre élémentaire de la solution et l'oxydation du réactif qui en résulte.

8. Le procédé selon l'une des revendications 1 à 3, dans lequel la séparation de l'acide sulfhydrique du mélange gazeux et la conversion de l'acide sulfhydrique séparé au cours de l'étape g) comprennent le fait de mettre en contact dans un dispositif d'absorption tertiaire le gaz réduit qui se dégage avec un absorbant aqueux pauvre et pouvant être régénéré et le fait de régénérer totalement l'absorbant chargé obtenu afin que l'on obtienne a gaz qui est alimenté vers l'installation de récupération du soufre.

9. Le procédé selon la revendication 7, dans lequel l'absorbant chargé est introduit directement dans le régénérateur.

10. Le procédé selon la revendication 8, dans lequel l'absorbant chargé est alimenté vers le dispositif de chauffage.

11. Le procédé selon l'une des revendications 1 à 3, dans lequel la séparation de l'acide sulfhydrique du mélange gazeux et la conversion de l'acide sulfhydrique séparé au cours de l'étape g) comprennent le fait de mettre en contact le mélange gazeux avec une solution aqueuse de réactif contenant une quantité efficace d'un réactif oxydant afin que l'on obtienne un gaz qui se dégage ne contenant substantiellement pas d'acide sulfhydrique et une solution aqueuse contenant du réactif réduit et du soufre élémentaire, de séparer le soufre élémentaire de la solution et d'oxyder le réactif réduit.

12. Le procédé selon la revendication 1 ou 2, dans lequel la séparation de l'acide sulfhydrique du gaz qui se dégage rapidement et la conversion de l'acide sulfhydrique séparé en soufre élémentaire au cours de l'étape g) comprennent le fait de mettre en contact le gaz qui se dégage rapidement avec une solution aqueuse de réactif contenant une quantité efficace d'un réactif oxydant afin que l'on obtienne un gaz pauvre et une solution aqueuse contenant du réactif réduit et du soufre élémentaire, de séparer le soufre élémentaire de la solution et d'oxyder le réactif réduit, et dans lequel la séparation de l'acide sulfhydrique du mélange gazeux et la conversion de l'acide sulfhydrique séparé au cours de l'étape g) comprennent le fait de mettre le mélange gazeux en contact avec une solution aqueuse de réactif contenant une quantité efficace d'un réactif oxydant afin que l'on obtienne un gaz qui se dégage ne contenant substantiellement pas d'acide sulfhydrique et une solution aqueuse contenant du réactif réduit et du soufre élémentaire, le fait de séparer le soufre élémentaire de la solution et d'oxyder le réactif réduit.
